# EUROPÄISCHE PATENTSCHRIFT

(11) **EP 0 619 076 B1**
(45) Veröffentlichungstag und Bekanntmachung des Hinweises auf die Patenterteilung: **14.05.1997**
(21) Anmeldenummer: 94103557.8
(22) Anmeldetag: 09.03.1994
(51) Int. Cl.: A23G 1/12

(54) **Conche**
Conching apparatus
Conche

(30) Priorität: 06.04.1993 DE 4310805
(43) Veröffentlichungstag der Anmeldung: 12.10.1994
(73) Patentinhaber: Richard Frisse GmbH, 32107 Bad Salzuflen (DE)
(72) Erfinder: Müntener, Kurt, D-32107 Bad Salzuflen (DE)
(74) Vertreter: Révy von Belvárd, Peter

(56) Entgegenhaltungen:
- EP-A- 0 518 025
- DE-A- 2 341 639
- US-A- 1 658 379
- US-A- 2 035 863

## Beschreibung

Die Erfindung bezieht sich auf eine Conche nach dem Oberbegriff des Anspruches 1.

Conchen werden zur Veredelung von Schokolademassen beispielsweise nach einer Bearbeitung der Schokolademasse auf Walzenstühlen eingesetzt. Bei der Herstellung von grossen Mengen einer gleichen Rezeptur können kontinuierliche Conchen oder aber Batch-Conchen mit grossem Volumen eingesetzt werden. Bei der Produktion kleiner Chargen müssen kleine Batch-Conchen eingesetzt werden, da der Conchen Trog bis zu einem Mindestfüllstand gefüllt sein muss.

Die meisten Schokoladehersteller stellen Schokolade mit verschiedenen Rezepturen her. Einzelne Spezialbetriebe verwenden bis zu 200 verschiedene Rezepturen, wovon die meisten aber nur in kleinen Mengen benötigt werden. Nebst den Rezepturen die nur in kleinen Mengen hergestellt werden, wird meistens eine Milchschokolade, eine schwarze und eine weisse Schokolade in grossen Mengen produziert. Um die verschiedenen Schokoladen in den unterschiedlichen Mengen mit minimalem Arbeitsaufwand herzustellen, müssen sowohl kleine als auch grosse oder kontinuierliche Conchen angeschafft werden. Dies bedingt aber einen grossen Investitions- und Platzbedarf, sodass die Vorteile des kleineren Arbeitsaufwandes wieder wettgemacht werden.

Aus der US-A-2,035,863 ist auch schon der Vorschlag bekannt, mehrere Conchenabteile übereinanderzutürmen und zwischen jedem Abteil ein Getriebe vorzusehen. Die grosse Anzahl von zu schmierenden Getrieben macht aber den Einsatz in einem Lebensmittelbetrieb in der Praxis unmöglich, ganz abgesehen davon, dass der getriebliche Aufwand zu erhöhten Kosten und zu einem vergrösseerten Platzbedarf führt, wobei der Höhe eines solchen Turmes aus Handhabungs- und Stabilitätsgründen auch noch Grenzen gesetzt sind. Kein Wunder also, dass dieser Vorschlag in der Praxis keinerlei Auswirkung gefunden hat.

Die erfindungsgemässe Aufgabe besteht nun darin eine Conche zu schaffen, die bei kleinem Platz- und Investitionsbedarf sowohl bei der Herstellung kleiner Mengen als auch grosser Mengen von Schokolademasse verschiedener Rezeptur optimal eingesetzt werden kann, wobei dem Ausbau hinsichtlich der Zahl der Abteile kaum Grenzen gesetzt sind und auch die lebensmittelrechtlichen Bestimmungen leicht einzuhalten sind.

Die erfindungsgemäßee Lösung sieht die kennzeichnenden Merkmale des Anspruches 1 vor.

Beim Drehen der Rotorwelle verreiben und verspachteln die Werkzeuge jedes Abteils die darin befindliche Schokolademasse. Falls sich in einem Abteil keine Schokolademasse befindet, drehen die Werkzeuge dieses Abteils ohne Widerstand.

Der Vorteil einer erfindungsgemässen Conche besteht darin, dass beispielsweise im Falle von zwei Abteilen, entweder in beiden Abteilen die gleiche Rezeptur oder in beiden verschiedene Rezepturen conchiert werden können. Bei grossen Mengen einer Rezeptur wird die Conche wie eine Conche mit grossem Volumen verwendet und bei zwei Rezepturen kleiner Menge, wie zwei Conchen mit halbem Volumen. Der apparative Aufwand ist bei einer erfindungsgemässen Conche viel kleiner als beim Stande der Technik. Denn nicht nur, dass an Getriebeteilen und dem dafür vorzusehenden Platz gespart wird, sind nur an beiden Endseiten des Troges Lagereinheiten und auch nur einen Antrieb nötig, wobei die Gefahr von Verschmutzungen durch Schmiermittel praktisch beseitigt wird.

Bei Conchen mit beispielsweise vier oder sechs Abteilen werden die Einsatzmöglichkeiten noch wesentlich vielfältiger, ohne dabei eine grössere Anzahl von Lagereinheiten und mehr als einen Antrieb zu benötigen. Da die Schokolade zu verschiedenen Zeiten in die einzelnen Abteile eingefüllt und aus diesen abgepumpt werden kann, können die verschiedenen Rezepturen jeweils direkt, wenn sie bereitstehen, in die Conche eingefüllt werden. Das ermöglicht beispielsweise, dass die nacheinander mit einer einzigen Verwiegestation und einem Walzenstuhl zur Veredelung bereitgestellten kleinen Mengen verschiedener Rezepturen im wesentlichen direkt zur Veredelung in die Conche eingefüllt werden können. Verschieden grosse Chargen werden dabei jeweils auf die für sie nötige Anzahl Abteile aufgeteilt.

Die erfindungsgemässe Conche ermöglicht sowohl mengenmässig als auch im zeitlichen Ablauf eine optimale und vielseitige Ausnützung ihrer Gesamt- oder Teilkapazität. Der gesamte Produktionsablauf wird verkürzt, da parallel verschiedene Rezepturen in verschiedenen Mengen veredelt werden können. Dieser Vorteil ergibt sich mit einem minimalen apparativen Aufwand.

Ein weiterer Vorteil der erfindungsgemässen Conche ergibt sich vorzugsweise aus dem zeitlich gestaffelten Füllen der verschiedenen Abteile. Dadurch sind die Schokolademassen in den verschiedenen Abteilen in unterschiedlichen Viskositätszuständen, was auch unterschiedlichen Energieaufnahmen, bzw. Antriebsbelastungen entspricht. Die totale Energieaufnahme aller Abteile ist ein Mittelwert der Energieaufnahme der einzelnen Abteile. Dieser Mittelwert liegt wahrend der ganzen Conchierzeit deutlich unter der maximal möglichen Energieaufnahme bei einer einzigen gleichzeitig eingefüllten Schokolademasse. Dies liegt daran, dass die Energieaufnahme beim Conchieren in einer Anfangsphase ansteigt, während einer kurzen Zeit in einem maximalen Bereich verbleibt und anschliessend langsam auf einen minimalen Wert absinkt. Zeitlich verschobene Conchiervorgänge in den Abteilen einer erfindungsgemässen Conche sind nacheinander im Bereich der maximalen Energieaufnahme, sodass die totale maximale Energieaufnahme kleiner als die Summe der einzelnen maximalen Energieaufnahmen ist.

Die Drehfrequenz der Rotorwellen kann im wesentlichen bei einem festen Wert gehalten werden oder aber abhängig vom Zustand der Schokolademasse mindestens eines Abteiles, oder abhängig von der totalen Energieaufnahme aller Abteile bzw. von der Antriebsleistung geregelt werden. Gegebenenfalls wird bei ab- bzw. zunehmender Leistung die Drehfrequenz erhöht bzw. erniedrigt, um so eine Vergleichmässigung der Antriebsleistung zu erzielen.

Da die Schokolademassen der verschiedenen Abteile im allgemeinen unterschiedliche Verweilzeiten in diesen Abteilen haben werden, wird sich die Belastung (und damit die Stromaufnahme des Motors) je nach der Anzahl der gerade mit Schokolademasse gefüllten Abteile verändern. Um dadurch mögliche Fehlregelungen zu vermeiden, ist es bevorzugt, wenn an die Motorregelung, die im allgemeinen einen Prozessor enthalten wird, ein Signal gesandt wird, das der Anzahl der gefüllten Abteile entspricht. Dieses Signal kann entweder durch jedem Abteil zugeordnete Niveausensoren (z.B. einen an der Oberseite angebrachten Ultraschall-Entfernungsmesser), zweckmässig aber durch einen entsprechenden Handschalter zur Eingabe der Anzahl der im Betrieb befindlichen Abteile oder durch einen mit der Verschlusseinrichtung für die jeweilige Auslassöffnung jedes Abteiles verbundenen Schalter abgegeben werden. Im letzteren Falle ist diesem Schalter zweckmassig ein Zeitglied nachgeschaltet, dessen Zeitkonstante der Zeit entspricht, welche vom Öffnen des Verschlusses der Auslassöffnung bis zur völligen (oder wenigstens teilweisen) Entleerung des so im Zustande der Entleerung befindlichen Abteiles vergeht.

Damit die Abteile nicht sehr schmal werden, hat die Conche vorzugsweise eine Gesamtlänge des Conchentroges, die deutlich grösser ist als die Tiefe und die Breite des Troges.

In den Trennwänden sind Durchtritts-Öffnungen für die mindestens eine Rotorwelle vorgesehen. Da die Rotorwelle unter Belastung quer zur Drehachse ausgelenkt werden kann, müssen die Öffnungen genügend gross sein, damit zwischen der Rotorwelle und der Öffnungsberandung keine reibungsbedingte Abnützung entsteht. Eine Lagerung der Welle an den Trennwänden führt wegen der Mehrfachlagerung und der Lagerdichtung gegen die Schokoladenmasse zu unnötigen technischen Problemen. Die erfindungsgemässe Conche sieht deshalb keine Lager, sondern lediglich Dichtungen so vor, dass ein Übertritt von Schokolademasse durch die Öffnungen in den Trennwänden verunmöglicht wird.

Vorzugsweise werden Tellerfedern eingesetzt, die einerseits an der Trennwand und andererseits an einem dicht auf der Rotorwelle sitzenden Anpressring dichtend anliegen. Um eine Gleitdichtung mit kleinstmöglicher Gleitgeschwindigkeit zu haben, werden die Tellerfedern vorzugsweise an der Trennwand befestigt und laufen mit ihrem Anschlussbereich auf einem im wesentlichen senkrecht zur Drehachse angebrachten Gleitbereich des Anpressringes. Der Gleitbereich ist radial so gross, dass der Anschlussbereich auch bei einer maximalen Wellenbewegung quer zur Drehachse dichtend auf dem Gleitbereich aufliegt. Natürlich können auch beliebige andere Dichtungen vorgesehen werden. Sie müssen eine genügende Dichtung ohne hohen Verschleiss ermöglichen und den Wellenausschlag quer zur Achse zulassen. Die Dichtungen können sowohl auf lediglich einer oder auch auf beiden Seiten jeder Trennwand angeordnet werden.

Um das Conchieren in den verschiedenen Abteilen bei unterschiedlicher Temperierung zu ermöglichen, sind vorzugsweise getrennte Kühl- bzw. Wärmekreisläufe vorgesehen. Zumindest im Trogwandbereich jedes Abteils ist ein Hohlraum für ein Kühl- bzw. Wärmemedium vorgesehen. Vorzugsweise ist aber auch in jeder Trennwand beidseits gegen die je angrenzenden Abteile ein Hohlraum vorgesehen, der an den Kühl- bzw. Wärmekreislauf des zugeordneten Abteils angeschlossen ist. Dadurch kann die Temperatur der gesamten Schokolademasse jedes Abteils in einem gewünschten Wertebereich gehalten werden.

Im folgenden wird eine erfindungsgemässe Conche anhand einer lediglich einen Ausführungsweg darstellenden Figur näher erläutert.
- Fig. 1: Perspektivische Darstellung einer Conche mit vier Abteilen
- Fig. 2: Längsschnitt durch eine Conche mit zwei Abteilen
- Fig. 3: Längsschnitt durch eine Conche mit vier Einzeltrögen

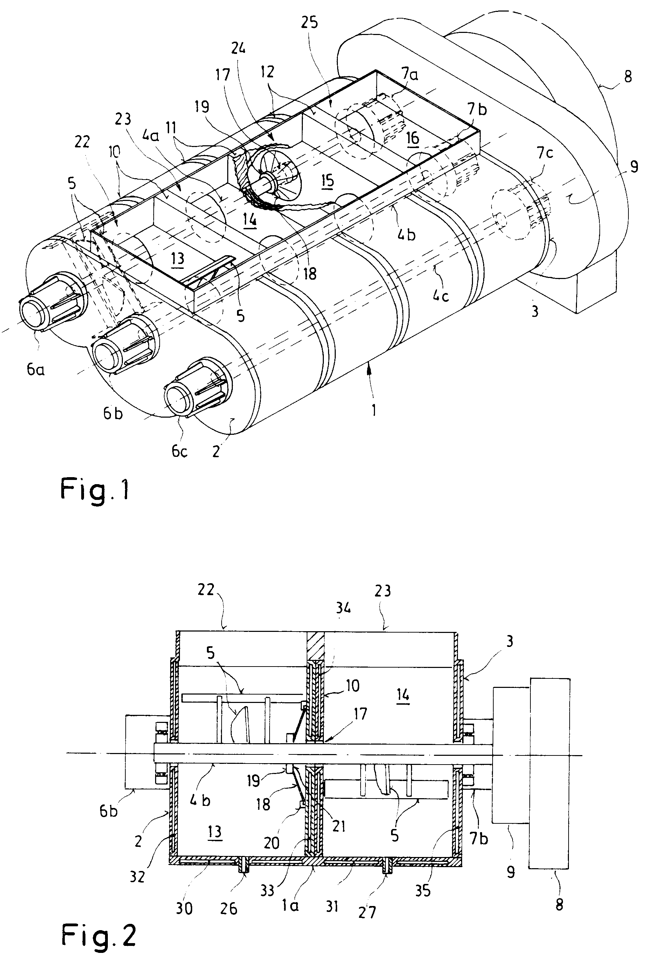

Eine erfindungsgemässe Conche gemäss Fig. 1 umfasst im wesentlichen einen länglichen Trog 1 mit seitlichen Endflächen 2 und 3 und mit mindestens einer in der Troglängsrichtung angeordneten Rotorwelle 4. Vorzugsweise sind drei parallele Rotorwellen 4a, 4b und 4c mit Conchierwerkzeugen 5 vorgesehen. Zur Lagerung der Rotorwellen 4a, 4b und 4c sind an den seitlichen Trogendflächen 2,3 Lagereinheiten 6a,6b,6c und 7a,7b,7c vorgesehen. Die Rotorwellen werden von einem Antrieb 8 über eine Übertragungsvorrichtung 9 angetrieben.

Der Trog 1 wird durch mindestens eine, vorzugsweise aber durch drei quer zur Rotordrehachse angeordnete Trennwände 10, 11 und 12 in mindestens 2, vorzugsweise aber 4 Abteile 13, 14, 15 und 16 unterteilt. In jedem der Abteile 13-16 sind an den Rotorwellen befestigte Conchierwerkzeuge 5 vorgesehen. Jede Trennwand weist für jede Rotorwelle eine Durchtrittsöffnung 17 auf, die so gross gewählt ist, dass ein Freiraum für Querbewegungen der Rotorwelle 4 besteht. Um den Durchtritt von Schokolademasse durch diesen Freiraum zu verhindern, sind Dichtungen 18 vorgesehen, welche vorzugsweise als Tellerfedern ausgebildet sind, die von einem Anpressring 19 gegen die jeweilige Trennwand 10, 11, 12 gepresst werden.

Die Ausführungsform der Conche gemäss Fig. 2 sieht eine Trennwand 10 und somit 2 Abteile 13, 14 vor. Die zur Abdichtung der Welle 4b in der Durchtritts-Öffnung 17 vorgesehene Tellerfeder 18 ist durch eine Halterung 20 fest mit der Trennwand 10 verbunden. Die der Trennwand 10 zugewandte Seite 21 des Anpressringes 19 ist als Gleitbereich 21 ausgebildet. Dieser Gleitbereich 21 ist radial so gross, dass die Tellerfeder 18 auch bei einer maximalen Wellenbewegung quer zur Drehachse dichtend auf dem Gleitbereich 21 aufliegt. Natürlich können auch beliebige andere Dichtungen, die eine genügende Dichtung ohne hohen Verschleiss ermöglichen und den Seitenschlag der Welle zulassen, vorgesehen werden. Die Dichtungen können sowohl auf lediglich einer oder auch auf beiden Seiten der Trennwand 10 angeordnet werden.

Jedes Abteil weist eine vorzugsweise oben angeordnete Einfüllöffnung 22, 23 (gemäss Fig. 1: auch noch 24, 25) und eine vorzugsweise an der tiefsten Stelle jedes Abteils angeordnete Auslassöffnung 26, 27 auf. Durch die Einfüllöffnungen 22, 23 kann die Schokolademasse auch bei drehender Rotorwelle 4 eingefüllt werden. Sobald die gewünschte Conchierzeit bzw. Schokoladen-Qualität in einem Abteil 13, 14 erreicht wird, kann die Schokolademasse dieses Abteils durch die entsprechende Auslassöffnung 26, 27 ausgelassen bzw. abgepumpt werden.

Zur Temperierung der Schokolademasse jedes Abteils ist gegebenenfalls je ein Kreislauf für ein Kühl- oder Wärmemedium vorgesehen. Gemäss Fig. 2 ist in einer den Trog 1 begrenzenden Wand 1a für jedes Abteil 13, 14 ein Hohlraum 30, 31 vorgesehen. Der Kühlkreislauf des Abteils 13 umfasst nebst dem Hohlraum 30 auch einen Hohlraum 32 in der Endwand 2 und einen Hohlraum 33 in der Trennwand 10. Analog gehören Hohlräume 31, 34 in der Trennwand 10 und 35 in der Endwand 3 zum Kühlkreislauf des Abteils 14. Zwischen den Hohlräumen 33 und 34 der Trennwand 10 ist gegebenenfalls eine Isolationsschicht vorgesehen, sodass sich die Kreisläufe im wesentlichen nicht beeinflussen.

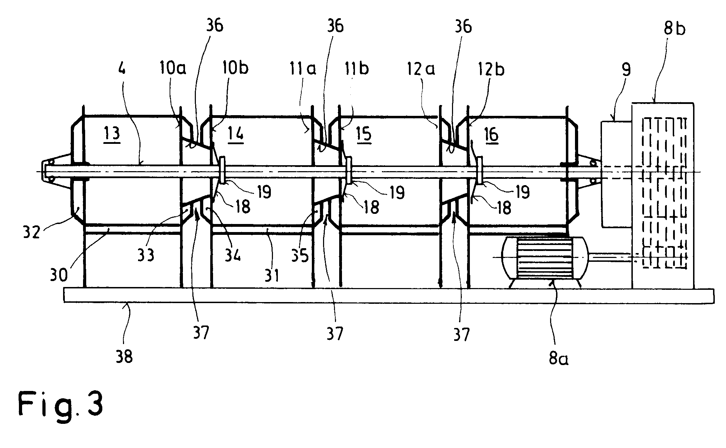

Eine Ausführungsform gemäss Fig. 3 sieht vor, dass die mindestens zwei, vorzugsweise aber vier Abteile 13-16 durch aneinandergereihte vollausgebildete Tröge gebildet werden. Dadurch sind jeweils zwei Trennwände 10a,10b; 11a,11b; 12a,12b vorzugsweise in einem, einen Luftspalt 37 bildenden, Abstand angeordnet. Vorzugsweise umfasst jeder Trog, bzw. jedes Abteil 13-16 auch einen Kühlkreislauf. Die Kühlhohlräume sind für die Abteile 13 und 14 mit den Bezugszeichen 30 - 35 bezeichnet. Der Luftspalt 37 zwischen den Abteilen 13 und 14 wirkt als Isolationsschicht zwischen den Hohlräumen 33 und 34. Die Tröge werden vorzugsweise durch, die Rotorwellen 4 aufnehmende, insbesondere (zur Aufnahme von Axialkräften, z.B. durch Wärmedehnungen) konische, Rohrstücke 36 miteinander verbunden. Durch Tellerfedern 18, die mit Anpressringen 19 gegen mindestens je eine Trennwand 10a - 12b gepresst werden, erfolgt die Dichtung zwischen den Rotorwellen 4 und den Trennwänden 10a - 12b. Zur Erhöhung der Stabilität wird gegebenenfalls ein die Abteile 13-16, bzw. die Tröge zusammenhaltender Rahmen 38, an dem die Trogwände befestigt sind, vorgesehen. Ebenfalls am Rahmen 38 ist ein Antriebsmotor 8a und ein Riemenantrieb 8b befestigt. Zwischen dem Riemenantrieb 8b und der mindestens einen Rotorwelle 4 ist eine Übertragungsvorrichtung 9, insbesondere ein Getriebe, angeordnet.

## Patentansprüche

1. Conche zum batchweisen Conchieren von Schokolademassen mit einem Trog und wenigstens einer Rotorwelle (4a,4b,4c) mit daran befestigten, radial abstehenden Werkzeugen (5), die von dieser in einem radialen Abstand liegen, für welche Rotorwelle (4a,4b,4c) eine gemeinsame Antriebseinrichtung (8) vorgesehen ist, wobei zum getrennten Verreiben und Verspachteln von Schokolademassen mindestens zwei Abteile (13-16) mit mindestens je einer Einfüllöffnung (22-25) und mindestens je einer Auslassöffnung so vorgesehen sind, dass kein Austausch von Schokolademasse zwischen den Abteilen (13-16) erfolgen kann, aber die Schokolademasse durch die jeweilige Auslassöffnung (26, 27) nach der jeweiligen, der Rezeptur und der Drehzahl angepassten, Bearbeitungszeit auslassbar bzw. abpumpbar ist, dadurch gekennzeichnet, dass
a) die mindestens eine Rotorwelle (4) horizontal durch die Abteile (13-16) hindurchläuft, wobei die Conchierwerkzeuge (5) aller Abteile (13-16) an der mindestens einen gemeinsamen Rotorwelle (4a,4b,4c) befestigt sind, dass
b) die mindestens eine Rotorwelle (4a,4b,4c) lediglich an beiden Trogenden gelagert ist, dass
c) die Abteile durch mindestens eine quer zu einer Rotorwelle (4) angeordnete Trennwand (10,11,12) voneinander getrennt sind, in dieser mindestens einen Trennwand (10, 11,12) für jede Rotorwelle (4a,4b,4c) eine Durchtrittsöffnung (17) angeordnet ist, und dass
d) jeder Durchtrittsöffnung (17) mindestens eine Dichtung (18,19) mit einem dichtenden Schleifteil so zugeordnet ist, dass die unter Belastung schwingende Rotorwelle (4a,4b,4c) sich innerhalb der Durchtrittsöffnungen (17) quer zur Drehachse der Rotorwelle (4) bewegen kann.

2. Conche nach Anspruch 1, dadurch gekennzeichnet, dass die Dichtung (18,19) eine Tellerfeder (18), vorzugsweise aus Metal, insbesondere aus Stahl umfasst, die vorzugsweise an der Trennwand (10,11,12) befestigt ist und an einer quer zur Drehachse angeordneten Schleiffläche eines auf der Welle (4) sitzenden und die Tellerfeder (18) gegen die Trennwand (10,11,12) pressenden Anpressringes (19) eine Schleifdichtung bildet und sowohl eine Wellendrehung als auch eine Wellenauslenkung quer zur Drehachse zulässt.

3. Conche nach Anspruch 1 oder 2, dadurch gekennzeichnet, dass mindestens zwei Abteile (13-16) einen eigenen Kühl- oder Wärmekreislauf (30-35) haben und vorzugsweise zwischen mindestens zwei Abteilen mit getrennten Kühlkreisläufen in der von der gemeinsamen Rotorwelle (4a,4b,4c) durchsetzten Trennwand eine Isolationsschicht vorgesehen ist.

4. Conche nach einem der vorhergehenden Ansprüche, dadurch gekennzeichnet, dass zwischen mindestens zwei aneinander anschliessenden Abteilen (13-16) jeweils zwei von der gemeinsamen Rotorwelle (4a,4b,4c) durchsetzte Trennwände (10a,10b; 11a,11b; 12a,12b), vorzugsweise in einem einen Luftspalt (37) bildenden Abstand, angeordnet sind und die beiden Trennwände (10a,10b; 11a,11b; 12a,12b) durch ein, vorzugsweise konisches, Rohrstück (36) so miteinander verbunden sind, dass die mindestens eine Rotorwelle (4) durch dieses Rohrstück (36) führt.

## Claims

1. Conching apparatus for conching chocolate masses in batches, comprising a trough and at least one rotorshaft (4a, 4b, 4c) with thereto attached and radially protruding tools (5) lying at a radial distance from the latter, with a common drive (8) provided for said rotorshaft (4a, 4b, 4c), and with provision for at least two compartments (13 - 16) for separate rubbing and joining of chocolate masses having each at least one filler opening (22 - 25) and each at least one outlet opening in such a manner that there can be no exchange of chocolate mass between the compartments (13 - 16) whilst the chocolate mass can be discharged or pumped out through a respective discharge opening (26, 27) following a respective processing period which suits a respective recipe and torque, **characterised in that**
a) the at least one rotorshaft (4) passes horizontally through the compartments (13 - 16), and the conching tools (5) of all compartments (13 - 16) are mounted on the at least one communal rotorshaft (4a, 4b, 4c);
b) the at least one rotorshaft (4a, 4b, 4c) is only mounted on both trough ends;
c) the compartments are separated from each other by at least one separating wall (10, 11, 12) which is arranged transversely to a rotorshaft (4), and in this at least one separating wall (10, 11, 12) is arranged a throughbore (17) for each rotorshaft (4a, 4b, 4c); and
d) each throughbore (17) is associated with at least one seal (18, 19) with a sealing grinding part so that the rotorshaft (4a, 4b, 4c) which vibrates under load can move within the throughbores (17) transversely to the rotary axis of the rotorshaft (4).

2. Conching apparatus according to Claim 1, **characterised in that** the seal (18, 19) embraces a cup spring (18), preferably made of metal and in particular of steel, which is preferably mounted on the separating wall (10, 11, 12) and establishes on a grinding surface, arranged transversely to the rotary axis of a press-on ring (19), which is seated on the shaft (4) and presses the cup spring (18) against the separating wall (10, 11, 12), a grinding seal and permits both a shaft rotation and a shaft deflection transversely to the rotary axis.

3. Conching apparatus according to Claim 1 or 2, **characterised in that** at least two compartments (13 - 16) have their own cooling or heating circuit (30 - 35) and that an insulation layer is provided in the separating wall which is passed through by the communal rotorshaft (4a, 4b, 4c), preferably between at least two compartments with separate cooling circuits.

4. Conching apparatus according to one of the above claims, **characterised in that** between at least two adjacent compartments (13 - 16) are arranged two respective separating walls (10a, 10b; 11a, 11b; 12a, 12b) which are passed through by the communal rotorshaft (4a, 4b, 4c), preferably at a distance which forms an airgap (37), and the two separating walls (10a, 10b; 11a, 11b; 12a, 12b) are interconnected by a preferably conical tubular piece (36) in such a manner that the at least one rotorshaft (4) passes through this tubular piece (36).

## Revendications

1. Conche destinée au conchage discontinu de pâtes de chocolat, comprenant une cuve et au moins un arbre de rotor (4a, 4b, 4c) sur lequel sont fixés des outils (5), qui en font saillie radialement, et qui sont situés à distance radiale de cet arbre de rotor (4a, 4b, 4c) pour lequel est prévu un dispositif d'entraînement (8) commun, au moins deux compartiments (13-16), avec chacun au moins une ouverture de remplissage (22-25) et chacun au moins une ouverture de sortie, étant prévus pour le broyage et le malaxage séparés de pâtes de chocolat, de façon telle, qu'il ne puisse pas se produire d'échange de pâte de chocolat entre les compartiments (13-16), mais que la pâte de chocolat puisse être évacuée ou extraite par pompage, par l'intermédiaire de l'ouverture de sortie (26, 27) considérée, après la durée de traitement appropriée, adaptée à la recette considérée et à la vitesse de rotation, caractérisée en ce que
a) ledit au moins un arbre de rotor (4) s'étend horizontalement au travers des compartiments (13-16), les outils de conchage (5) de tous les compartiments (13-16) étant fixés au dit au moins un arbre de rotor commun (4a, 4b, 4c), en ce que
b) ledit au moins un arbre de rotor (4a, 4b, 4c) est monté sur paliers uniquement aux deux extrémités de cuve, en ce que
c) les compartiments sont séparés les uns des autres par au moins une cloison de séparation (10, 11, 12) disposée transversalement à un arbre de rotor (4), une ouverture de passage (17) étant agencée pour chaque arbre de rotor (4a, 4b, 4c) dans ladite au moins une cloison de séparation (10, 11, 12), et en ce qu'
d) à chaque ouverture de passage (17) est associé au moins un joint d'étanchéité (18, 19) comportant un frotteur d'étanchéité, de façon telle que l'arbre de rotor (4a, 4b, 4c) oscillant sous charge, puisse se déplacer à l'intérieur des ouvertures de passage (17), transversalement à l'axe de rotation de l'arbre de rotor (4).

2. Conche selon la revendication 1, caractérisée en ce que le joint d'étanchéité (18, 19) comprend une rondelle-ressort (18), de préférence en métal, notamment en acier, qui, de préférence, est fixée sur la cloison de séparation (10, 11, 12), et qui forme un joint d'étanchéité à frottement sur une surface de frottement disposée transversalement à l'axe de rotation et faisant partie d'un anneau de pression (19) monté sur l'arbre (4) et pressant la rondelle-ressort (18) contre la cloison de séparation (10, 11, 12), en permettant aussi bien une rotation de l'arbre qu'un déport de l'arbre transversalement à l'axe de rotation.

3. Conche selon la revendication 1 ou 2, caractérisée en ce qu'au moins deux compartiments (13-16) ont leur propre circuit de refroidissement ou de chauffage (30-35), et en ce que de préférence entre au moins deux compartiments à circuits de refroidissement séparés, est prévue une couche d'isolation dans la cloison de séparation traversée par l'arbre de rotor commun (4a, 4b, 4c).

4. Conche selon l'une des revendications précédentes, caractérisée en ce qu'entre au moins deux compartiments (13-16) se raccordant l'un à l'autre, deux cloisons de séparation (10a, 10b; 11a, 11b; 12a, 12b) traversées par l'arbre de rotor commun (4a, 4b, 4c), sont agencées de préférence à une distance l'une de l'autre formant un interstice (37), et les deux cloisons de séparation (10a, 10b; 11a, 11b; 12a, 12b) sont reliées l'une à l'autre par une pièce tubulaire (36), de préférence conique, de façon telle que ledit au moins un arbre de rotor (4) passe au travers de cette pièce tubulaire (36).
